# EUROPÄISCHE PATENTSCHRIFT

(11) **EP 1 652 422 B1**
(45) Veröffentlichungstag und Bekanntmachung des Hinweises auf die Patenterteilung: **09.05.2012**
(21) Anmeldenummer: 05022012.8
(22) Anmeldetag: 10.10.2005
(51) Int. Cl.: A01G 9/14, C08K 3/22

(54) **Thermoplastische Erzeugnisse zur Wachstumbeschleunigung, Ertragssteigerung und Qualitätsverbesserung von Nutzpflanzen in der Landwirtschaft**
Thermoplastic products for growth acceleration, yield increase and quality improvement of crop plants in the agriculture
Produits thermoplastiques pour l'acceleration de la croissance, accroissement du rendement et amélioration de la qualité de la culture de plantes dans l'agriculture

(30) Priorität: 19.10.2004 DE 102004051354
(43) Veröffentlichungstag der Anmeldung: 03.05.2006
(73) Patentinhaber: GRAFE Color Batch GmbH, 99444 Blankenhain (DE)
(72) Erfinder: Caro, Carlos J. Dr., 99425 Weimar (DE); Henkel, Petra, 99510 Apolda (DE); Weinholdt, Michael, 07751 Jena-Wogau (DE)
(74) Vertreter: Oehmke, Volker

(56) Entgegenhaltungen:
- DE-A1- 10 022 037
- US-A1- 2003 054 160

## Beschreibung

Gegenstand der Erfindung ist die Verwendung eines Kunstsoffmaterials nach Anspruch 1 für die Herstellung von Gewächshausfolien und sonstigen Bedachungen für die Landwirtschaft und dem Gartenbau, die durch veränderte strahlungsphysikalische Eigenschaften das Wachstum bestimmter Pflanzen positiv beeinflussen, was zu einer signifikanten Ertragsersteigerung führt.

Es ist bekannt, dass die gesamte globale Sonneneinstrahlung Anteile aus dem UV-, dem Sichtbaren und dem Infrarot-Bereich enthält.

Der UV-Bereich wird in 3 Teile eingeteilt. Unterhalb von 280 nm liegt der UV-C-Bereich, zwischen 285 und 315 nm der UV-B-Bereich, wobei sämtliche Strahlung unterhalb 300 nm die Erdoberfläche nicht mehr erreicht. Der UV-A-Bereich von 315 bis 380 nm ist derjenige, wogegen man aktiv durch die Zugabe von Substanzen für UV-Absorption vorgeht.

Der Bereich von 380 bis 780 nm enthält das sichtbare Farbspektrum, bestehend aus violett, blau, grün, gelb, orange und rot.

Der Infrarot-Bereich wird in 3 Teile A, B und C eingeteilt. IR-A und IR-B werden zusammen als NIR (nahes Infrarot) von 780 nm bis 1400 nm (IR-A) und 1400 nm und 3000 nm (IR-B) bezeichnet. Der Bereich IR-C heißt auch FIR oder fernes Infrarot und geht über 3000 nm hinaus.

Die globale Sonneneinstrahlung ermöglicht Leben auf der Erde. Das Wachstum von Pflanzen ist eine Thematik, die die Menschheit mit den technischen Entwicklungen und Erneuerungen auf dem Gebiet der Landwirtschaft vorangetrieben hat. Speziell die Verwendung von Gewächshausfolien hat sich weltweit als preiswerte Möglichkeit entwickelt, die Anbaudauer, den Ertrag und die Anbaufläche zu verlängern, zu erhöhen und zu schützen.

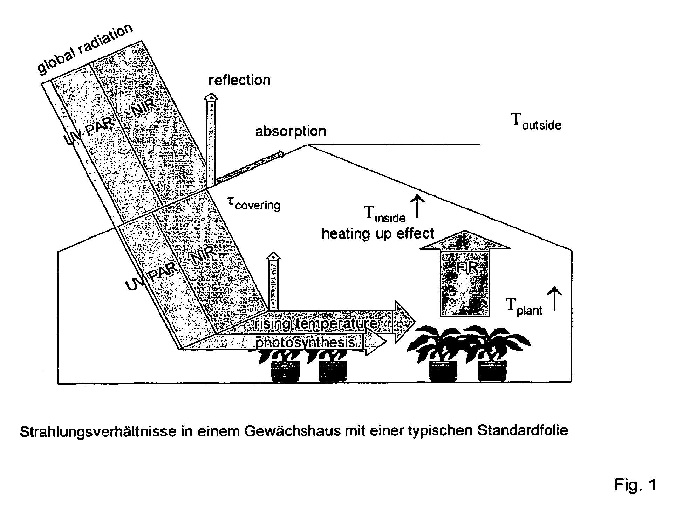

Die Figur 1 beschreibt schematisch die spektralen Lichtverhältnisse mit einer typischen Standardfolie als Abdeckung eines Gewächshauses, wie sie üblicherweise in der Landwirtschaft zu finden ist. Die globale Sonneneinstrahlung trifft auf das Bedachungsmaterial. Bestimmte Anteile werden reflektiert oder absorbiert, aber insgesamt gehen mehr oder weniger ungehindert alle Anteile durch. Jedes der Anteile ist für verschiedene Effekte verantwortlich. Man weiß daher, dass der Spektralbereich zwischen 400 und 700 nm, genannt die photosynthetisch aktive Strahlung (PAR - photosynthetic active radiation), für die Photosynthese der Pflanze, ihr Wachstum und ihre Entwicklung, allein notwendig ist. Der Rest der Anteile der globalen Strahlung (UV, NIR, FIR) wirkt sich ausschließlich nachteilig aus. Die Pflanzenblätter werden durch zu hohe UV-Strahlung ausgetrocknet oder verbrannt. Dadurch wird eine Photosynthese durch die Blätter gestört. Die NIR-Strahlung wird weitgehend durchgelassen, so dass die damit verbundene Wärmestrahlung zur Erwärmung im Gewächshaus beiträgt.

Es gab demzufolge zahlreiche Versuche, durch Einbringen verschiedenster Zusatzstoffe (Additive), die Gewächshausfolie derart zu modifizieren, dass nur noch solche Anteile des globalen Sonnenspektrums durchgelassen werden, die für ein optimales Wachstum der Pflanzen notwendig und ausreichend sind. Bereits VERLODT und VERSCHAEREN (VERLODT, I. and VERSCAEREN, P. 1997. New interference film for climate control. Plasticulture 115: 27-35.) hatten angedeutet, dass durch das Blockieren der NIR-Strahlung die Temperatur innerhalb eines Gewächshauses signifikant reduziert werden kann.

Es ist aus wissenschaftlichen Untersuchungen bekannt, dass Pflanzen nur optimal wachsen können, wenn ein bestimmter Temperaturbereich im Gewächshaus eingehalten wird. Wird dieser Temperaturbereich unter- oder überschritten, dann wird das Wachstum der Pflanzen ausgebremst und negativ beeinflusst.

Das beschriebene Problem besteht vorrangig in südlichen Ländern Europas, des Nahen und Mittleren Ostens und Nordafrikas, wo überdurchschnittlich über das ganze Jahr sehr hohe Temperaturen herrschen. In diesen Regionen wird z. B. ein weißer Kreideüberzug auf der Bedachung der Gewächshäuser verwendet, um die Hitze innerhalb des Gewächshauses zu reduzieren.

Das Prinzip beruht darauf, dass durch die weiße Farbe eine Reflexion der wärmebringenden Anteile der globalen Sonneneinstrahlung stattfindet. Dies führt erwartungsgemäß zu einer Reduzierung der wärmebringenden NIR-Anteile. Nachteilig an dieser Lösung ist aber, dass neben der Reduzierung der NIR-Anteile des Lichtes auch die PAR-Anteile erheblich geschwächt werden.

Berücksichtigt man alle bekannten Informationen über Photomorphogenese, also über den Einfluss von Licht auf die Pflanzenmorphologie und auf das Pflanzenwachstum und die Photoselektivität, also die Auswahl bestimmter spektraler Bereiche der globalen Strahlung zur vorteilhaften Ausnutzung an Pflanzen, kommt man zu dem Ergebnis, dass die perfekte Gewächshausfolie mit einem Wärmeblocksystem folgenden Spektralverlauf aufweisen müsste:
Komplette UV-Absorption, höchst mögliche PAR-Transmission sowie komplette Absorption des NIR-Bereiches.

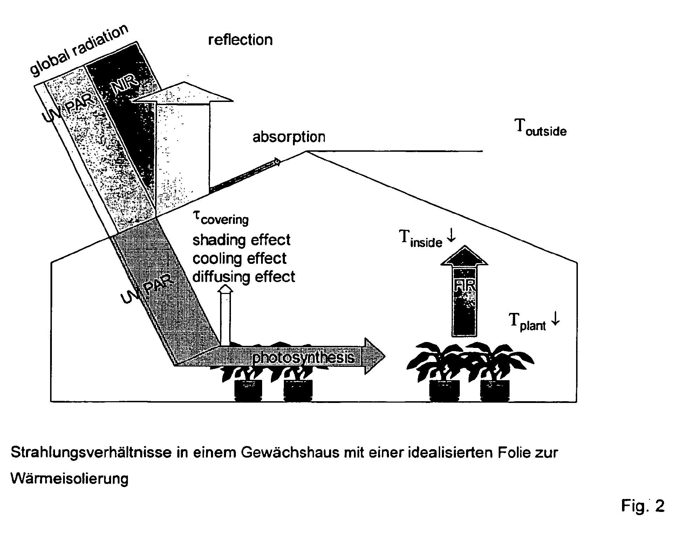

Aus Sicht eines optimalen Pflanzenwachstums ist es also wünschenswert, über ein Bedachungsmaterial für Gewächshäuser zu verfügen, das den UV-Bereich unterhalb einer Wellenlänge von 380 nm und den NIR-Bereich oberhalb einer Wellenlänge von 780 nm vollständig am Eindringen in das Gewächshaus hindert und gleichzeitig den PAR-Bereich zwischen einer Wellenlänge von 380 nm und 780 nm möglichst ungehindert in das Gewächshaus hindurch lässt. Die Lichtverhältnisse in einem Gewächshaus unter Verwendung einer derartigen Folie sind in Fig. 2 dargestellt. Wie man schematisch sehen kann, wird nur ein geringer Anteil an UV-Strahlung durchgelassen. Dafür steht der Pflanze der PAR-Bereich voll zur Verfügung. Die NIR-Strahlung wird weitgehend absorbiert oder reflektiert, was zur Abnahme der Temperatur im Gewächshaus führt.

Man spricht in diesem Zusammenhang von "NIR-Absorbern" sowie von "Reflexions- und Interferenzpigmenten", wenn bestimmte Substanzen oder Zuschlagstoffe in der Lage sind, die Anteile der NIR-Strahlung aus der globalen Sonneneinstrahlung zu absorbieren, zu reflektieren bzw. durch Interferenzerscheinungen ihre Wirkung entfalten.

Reflexions- und Interferenzpigmente unterscheiden sich von NIR-Absorbern in den chemischen und physikalischen Eigenschaften, den hervorgerufenen Effekten sowie zuletzt auch in ihrem Preis (siehe HOFFMANN, S. 1999a: The effect on Photoselective Cladding Materials on the Growth of Ornamental Plants I. Review. Gartenbauwissenschaft 64 (3): 100-105).

Interferenzpigmente sind in der Regel beschichtete, plättchenförmige Metalloxyden. Auf dem Markt gibt es Glimmer-Partikel, die eine Beschichtung aus Zinn/Antimonoxyd tragen. Des Weiteren gibt es auch solche Glimmer-Teilchen als Kern, die mehrere Schichten, wechselweise von Titan- und Siliziumdioxyd tragen. Als Reflexionspigmente agieren Metallteilchen wie Kupfer und Aluminium (siehe DAPONTE, T.L.F. 1997. Recent advances in photoselective films with interference effects. In: Plant Production in Closed Ecosystems: 123-138 (Editors: Goto, E., Kurata, K., Hayashi, M. and Sase, S.), Kluwer Academic Publishers, Dordrecht - Boston - London.).

Erschwert wird die Bereitstellung eines derartigen Materials zusätzlich dadurch, dass eine derartige Gewächshausfolie noch lange nicht auf alle Pflanzen gleichmäßig anwendbar wäre, da das biologische Verhalten jeder Pflanze, speziell Nutzpflanzen in Gewächshausfolien wie Gurken, Tomaten, Paprika, Grüne Bohnen, Melonen etc, unter gleichen Bedingungen völlig unterschiedlich ist.

Es sind verschiedene Versuche bekannt, derartige strahlungsphysikalische Eigenschaften in Kunststoffmaterialien zu erzeugen. Nachfolgend werden hier einige genannt.

Die DE 199 43 169 beschreibt ein Verfahren zur Herstellung thermotroper Folien oder Folienverbunde. Die darin beschriebenen Folien erzeugen bei Überschreitung einer als Trübungstemperatur bezeichneten Temperatur eine Eintrübung der Folien durch Entmischung der in der Folie enthaltenen Komponenten mit unterschiedlichen Brechungsindizes. Diese Eintrübung bewirkt im Wesentlichen eine stärkere Streuung einfallenden Lichtes. D. h., dass zwar die gerichtete Transmission von Sonnenlicht beeinträchtigt wird, jedoch nicht oder nur sehr wenig die diffuse Transmission. Eine Absorption von Teilen des Sonnenlichtes, z. B. der NIR-Strahlung tritt dadurch jedoch nicht ein. Der erzeugte "Kühleffekt" ist deshalb nur gering.

Das in der DE 44 33 090 beschriebene Material bewirkt ebenfalls nur eine Eintrübung oberhalb bestimmter Temperaturen und hat damit dieselben Nachteile wie das in der DE 199 43 169 beschriebene.

In der DE 195 30 797 ist ein Kompositmaterial zur Abschirmung von Strahlung beschrieben. Die abschirmende Wirkung wird dabei durch das Aufbringen von Schichtsystemen aus hoch- und niedrigbrechenden Substanzen (Interferenzpigmente) auf einen Kunststoffträger erzeugt. Die Aufbringung selbst erfolgt durch Sputterverfahren oder Bedampfung in evakuierten Sputter- oder Bedampfungsanlagen. Nachteilig an diesen Materialien ist neben den hohen Kosten ihrer Herstellung ihre große Empfindlichkeit gegenüber mechanischen Einwirkungen, wie sie z. B. in der Landwirtschaft regelmäßig auftreten.

Die DE 423 00 23 berichtet ebenfalls über ein Kompositmaterial, bestehend aus einem Polymer und einem grünen Interferenzpigment zur Abschirmung von Strahlung in der Landwirtschaft, wobei dieses Material für die Verstärkung von Gewächshausfolien verwendet wird.

EP 0659 198 berichtet auch über Solarabschirmungs- bzw. Filter-Verbundmaterialien für die Verwendung in der Landwirtschaft und im Gartenbau, wobei auch eine Materialkombination, bestehend aus einem grünen Interferenzpigment und einem Polymer, erwähnt wird. Die Endanwendung sollen Bedachungsmaterialien in der Landwirtschaft sein.

Folien können allgemein auf ihre Lichtdurchlässigkeit untersucht werden. Dazu werden Transmissionsspektren im Wellenlängenbereich von 200 bis 2500 nm mit einem UV-VIS-NIR-Spektralphotometer (Lambda 900, Perkin Elmer) aufgenommen. Zur weiteren Charakterisierung kann man aus diesen UV-VIS-Spektren gemäß DIN EN 410:1998 strahlungsphysikalische Kennwerte ermitteln. Als Maß für die Transmission im sichtbaren Bereich des Lichtes werden der Lichttransmissionsgrad µᵥ und als Maß für die Durchlässigkeit der gesamten Sonnenenergie der Gesamtenergiedurchlassgrad g nach DIN EN 410:1998 berechnet.

Diese Kennwerte werden bei allen Literaturstellen für eine Bewertung eines NIR-blockierenden Testmaterials herangezogen. Sie sind nur indirekt das Ergebnis von spektralphotometrischen Messungen. Daher wäre es wünschenswert, die Effekte und Wirkungen dieser Materialien über die Messung der Temperatur und des durchgelassenen PAR-Bereiches unter reellen Bedingungen zu erfahren. Diese zwar aussagekräftigen, jedoch kostspieligen und langandauernden Untersuchungen erfordern eine gute geografische, logistische und materialtechnische Planung, unter strikter Einhaltung von Terminen, die durch die saisonalen Eigenheiten jeder Pflanze festgelegt sind.

Es ist demnach mit Sicherheit billiger und schneller, die tatsächliche Temperaturänderung unterhalb der Folien in einem geschlossenen, wärmeisolierten Gefäß zu messen. Wenn man wärmeisolierte Gefäße mit den jeweiligen Folien als Abdeckung verwendet, könnten die darin gemessenen Werte einen sehr guten Anhaltspunkt geben, wie sich diese Materialien in einem Gewächshaus unter kommerziellen Bedingungen verhalten würden.

Um diese Vorteile und Nachteile der vorher genannten Interferenzpigmente zu untersuchen, wurden verschiedene Einschichtfolien auf Basis Polyethylen mittels Folien-Blasverfahren mit einer Dicke von 150 µm, mit zwei verschiedenen Konzentrationen eines Interferenzpigmentes gemäss EP 065 91 98 und DE 423 00 23 hergestellt. Dabei wurden Konzentrationen von 2,5% und 5% ohne weitere Modifikatoren erstellt. Danach wurden diese Testfolien auf Zypern im Frühjahr als Bedachung für wärmeisolierte Gefäße verwendet. Auf Zypern herrschen im Frühjahr und im Sommer klimatische Bedingungen, die eine Anwendung von NIR-blockierenden Substanzen in Gewächshausfolien rechtfertigen. Anschließend wurden die Temperaturen, die PAR-Strahlung sowie die ankommende Sonneneinstrahlung innerhalb und außerhalb der Testgefäße gemessen.

Je nach Konzentration in der Folie wurde die Temperatur innerhalb der Testgefäße während der Mittagszeit, die Zeit mit der höchsten Sonneneinstrahlung, um 5 bis 10°C reduziert.

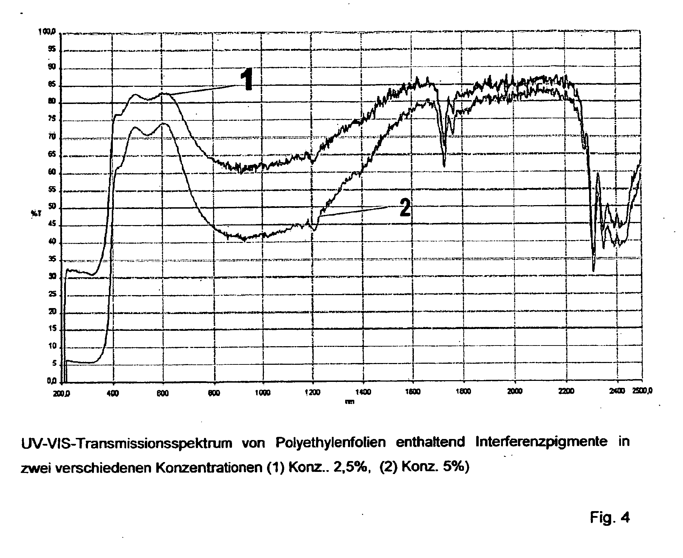

Jedoch minimiert sich dieser positive Effekt durch die stark reduzierte PAR-Transmission der verwendeten Folien mit jeweils 47% und 57% Licht-Transmission im PAR-Bereich. Zum besseren Verständnis soll an dieser Stelle Fig. 4 herangezogen werden. Daraus sind die UV-VIS-Transmissionspektren dieser Testfolien zu entnehmen.

Selbst der Vorteil der niedrigeren, im Vergleich zu NIR-Absorbern höheren Preise, würde sich reduzieren, wenn man 2 bis 5% im Endprodukt benötigen würde, um eine signifikante Temperaturabnahme zu erzielen.

Wenn man bedenkt, dass 1% weniger Licht-Transmission zu etwa 1 % weniger Pflanzenertrag führt, dann sind diese Folien unter landwirtschaftlichen Gesichtspunkten nicht anwendbar.

Zudem würde für die Erzielung des gewünschten Effektes das Konzentrat mit einer Dosierung von 10% und 20% zugegeben. Diese Masterbatchdosierungen liegen sehr weit hoch von denen, die der Fachmann anwenden würde.

Zusätzliche Schwierigkeiten bereitet der Umstand, dass es bei industriellen Anwendungen schwierig ist, ein Additivkonzentrat in diesen Größenordnungen (10 bis 20%) zuzugeben, wenn man bedenkt, dass die Rohstoffbasis zusätzlich noch weitere organische sowie anorganische Additive aufnehmen muss, wie UV-Absorber, UV-Stabilisatoren, Additive für Lichtstreuung, Antifog (Antitau) etc. Zusammenfassend kann man über Interferenzpigmente sagen, dass sie als Additiv für eine Landwirtschaftsfolie zwar erfolgreich die Temperatur innerhalb eines Gewächshauses, in Abhängigkeit der Konzentration im Endprodukt, stark zu reduzieren vermögen, jedoch um den Preis einer verringerten PAR-Transsmission. Wie bereits beschrieben, neben Interferenz- und Reflexionspigmenten kann man für die Blockierung der NIR-Strahlung auch so genannte NIR-Absorber verwenden.

Im EP 128 7061 sind transparente Polymermaterialien beschrieben, die z. B. für Anwendungen als Automobilscheiben ähnliche Probleme lösen, indem Polycarbonat als transparentes Polymermaterial, zusätzlich oberflächenmodifiziertes Indiumzinnoxid und organische NIR-Absorber zugegeben werden. Die Anwendungen im Bereich Automobilverscheibung erfordern jedoch im Unterschied zu Anwendungen im Agrarbereich ausschließlich einen hohen Anteil an gerichteter Transmission der Materialien und gestatten absolut keine diffuse Lichttransmission im visuellen Spektralbereich. Dadurch wird eine sehr aufwändige Herstellung der Oxidteilchen und die zusätzliche Verwendung von organischen NIR-Absorbern notwendig, was die Materialien zusätzlich verteuert und die Anwendungen im Agrarbereich erschwert oder sogar verhindert. Nachteilig an dieser Lösung für eine Anwendung in der Landwirtschaft ist darüber hinaus, dass die organischen NIR-Absorber in Polyolefinen, die die wichtigsten Kunststoffe für Gewächshausfolien darstellen, keine ausreichende Migrations- und UV-Beständigkeit besitzen und schon nach kurzer Zeit ihrer Anwendung unter äußeren Witterungsbedingungen ihre Wirkung verlieren.

Mit der US 2003/054160 A1 wird offenbart, dass die dort genannten Polymere, PET, PBT und PVB, in der Regel amorphe Kunststoffe, nicht nur vor sondern auch nach der Zugabe der Nanopartikel und anderer Zusatzstoffe transparent bleiben müssen, um möglichst keine lichtstreuenden Effekte zu erzeugen. Des Weiteren wird die Anwesenheit von Lanthanhexaborid erfindungswesentlich verlangt.

Auffällig bei allen vorher dargestellten Lösungen, unabhängig, ob sie einen oder mehrere NIR-Absorber, Reflexions- oder Interferenzpigmente verwenden, ist, dass ihre vermutete positive Wirkung auf ein verbessertes Pflanzenwachstum ausschließlich aus spektralphysikalischen Messungen an Probekörpern (Folien) von Bedachungsmaterialien für die Landwirtschaft und Gartenbau geschlussfolgert wird. In allen vorstehend erwähnten Darstellungen wird berichtet, dass bei höherer Konzentration der Aktivsubstanz weniger Wärme im Inneren des Gebäudes oder des Fahrzeuges gefühlt wird. Als Nachweis für diesen Effekt werden ausschließlich spektralphotometrische Kenngrößen wie LTD- und TDS-Daten, gewonnen aus kleinen Musterfolien oder Glasproben, angeführt.

Es wurden bisher keine Bespiele bekannt, in denen die vermuteten Effekte in einem Gewächshaus, entweder unter kommerziellen Gesichtspunkten oder unter wissenschaftlicher Aufsicht, von Anfang bis Ende einer Saison an einer bestimmten Pflanze nachgewiesen wurden. Es wird auch nicht ansatzweise berücksichtigt oder darüber berichtet, dass jede Pflanze, je nach Licht, Wärme, Nährboden, Ort, etc., ein anderes Wachstumsverhalten hat, und deshalb eine Gewächshausfolie mit wärmereduzierender Wirkung nicht per se in jedem Ort von Spanien, Nordafrika, Mittleren und Nahen Osten, unabhängig von der Pflanze innerhalb des Gewächshauses, verwendet werden kann.

Allen bisher bekannten Lösungen haftet der Mangel an, den unzureichenden Nachweis erbracht zu haben, dass diese Kompositmaterialien tatsächlich zu Temperaturerniedrigungen und nur deswegen zu positiven Effekten unter landwirtschaftlichen Gesichtspunkten führen können.

Aufgabe der Erfindung ist es deshalb, eine Möglichkeit für eine Bedachung für landwirtschaftlich genutzte, nicht bewegliche Strukturen wie Gewächshäuser anzugeben, so dass den darin angebauten Pflanzen bessere Wachstumsbedingungen angeboten werden und somit die Nachteile des Standes der Technik beseitigt werden. Die Bedachung soll dabei insbesondere auf folgende Erscheinungen Einfluss nehmen:
- bei hoher Sonneneinstrahlung soll eine geringere Aufheizung erfolgen,
- in den Abend- und Nachtstunden soll eine schnelle Auskühlung vermieden werden,
- eine möglichst hohe Strahlungsdurchlässigkeit im PAR-Bereich des sichtbaren Lichtes sollte erfolgen und
- die Gewährleistung von lichtstreuenden Effekten überall im Gewächshaus.

Gelöst wird die Aufgabe dadurch, dass dem Kunststoff Nanopartikel halbleitender Materialien zugegeben werden, die hohe Absorptionen im NIR-Bereich und gleichzeitig hohe Lichttransmissionsgrade im PAR-Bereich aufweisen.

Überraschenderweise wurde nun herausgefunden, dass Gewächshausfolien, die mit nanoskaligen Partikeln eines II-IV-Halbleiters verstärkt wurden, erstmalig zu einer signifikanten Erhöhung von Ernteerträgen an Tomatenpflanzen führt. Durch die anderen Resultate aus dem gleichzeitigen Anbau von Paprika und grünen Gurken wurde der Beweis erbracht, dass diese Art der Additive in Gewächshausfolien nicht generell für alle in einem Gewächshaus angebauten Pflanzen, am gleichen Ort, geeignet sind. 1

Gegenstand der Erfindung ist somit die Verwendung einer Folie oder Platte nach Anspruch 1.

Als teilkristallines, thermoplastisches Polymer kommt praktisch jedes durch Extrusionsprozesse zu Folien und Platten verarbeitbares teilkristallines Polymer zum Einsatz.

Als halbleitende Materialien kommen bevorzugt Materialien aus der Gruppe der so genannten II-IV-Halbleiter, bevorzugt Zinn- und Indiumoxid und Indium-Zinnoxide variabler Zusammensetzung und mit Antimon dotierte Zinnoxide, zum Einsatz. Die maximale Teilchengröße der Nanopartikel liegt unter 200 nm. Derartige Materialien lassen sich problemlos im Extrusionsprozess in jede beliebige, extrudierbare Kunststoffmatrix einarbeiten. Je nach Konzentration und Dicke des Substrates wird von einem so modifizierten Kunststoff die NIR-Strahlung vollständig oder teilweise absorbiert. Im visuellen Spektralbereich dagegen ist auch bei hohen Konzentrationen kein oder nur ein schwacher Transmissionsverlust feststellbar.

Die erfindungsgemäßen nanoskaligen Teilchen werden in Konzentrationen von 0,01 bis 5 Gew.-% dem thermoplastischen Polymer zugegeben.

Die erfindungsgemäße Verwendung der Folien oder Platten kann auf an sich bekannte Art zusätzlich modifiziert werden. Zum Beispiel können zur Erhöhung der Alterungsbeständigkeit bekannte UV-Absorber und UV-Stabilisatoren zugegeben werden. Ebenso ist es möglich, zur Erhöhung der Temperatur- und Oxidationsbeständigkeit Thermo- und Oxidationsstabilisatoren zuzugeben. Wenn, wie in der Landwirtschaft gewünscht, spezielle Einfärbungen im visuellen Spektralbereich notwendig sind (wie z. B. zur gezielten Einstellung des Verhältnisses zwischen hell- und dunkelrot), können diese ohne Beeinträchtigung der geringen NIR-Transmission mit bekannten Farbstoffen oder Pigmenten erreicht werden.

Gegenstand der Erfindung sind somit auch, Verwendungen die neben der erfindungsgemäßen Verwendung weitere zur Modifizierung von Thermoplasten übliche und bekannte Additive und Modifikatoren enthalten.

Die Herstellung der Zusammensetzung der erfindungsgemäß Verwendung erfolgt entweder direkt durch Zugabe der nanoskaligen Teilchen zum thermoplastischen Material vor oder während der Verarbeitung des thermoplastischen Polymers durch einen Extrusionsprozess oder durch Herstellung zunächst eines Konzentrates (Masterbatch) der nanoskaligen Teilchen im verwendeten thermoplastischen Polymer und Zugabe des so hergestellten Konzentrates zum thermoplastischen Polymer während der üblichen Verarbeitung durch Extrusion.

Die Modifizierung der Kunststoffe kann jedoch auch in Verbundfolie durch Coextrusion erfolgen. Dies kann z. B. dann vorteilhaft sein, wenn aus anderen Gründen ohnehin mehrschichtige Folien hergestellt werden.

Die Maßnahmen der Verarbeitung der erfindungsgemäßen Zusammensetzung zu Folien und Platten durch Extrusion und Folieblasen erfolgt durch übliche Methoden und sind dem Fachmann bekannt.

Im Gegensatz zur EP 1 287 061 gelingt es auch ohne zusätzliche Verwendung weiterer organischer NIR-Farbstoffe. Die Anwesenheit von weiteren organischen NIR-Absorbern, auch wenn sie in ausreichender Menge und wirksam gegen Migration, UV-Licht und Witterung geschützt sind, hat keinen wesentlichen Einfluss auf die Wirkung der Aktivsubstanz in der Gewächshausfolie zu den darin angebauten Pflanzen.

Überraschenderweise wurde in diesem Zusammenhang ein Mehrertrag an Tomaten festgestellt, ohne dass eine signifikante Senkung der Temperatur, und trotz Erhöhung der Konzentration an Aktivsubstanz um ein Vielfaches, beobachtet werden konnte. Dies widerspricht der allgemeinen Aussage, nicht nur aus der EP 1 287 061, dass mehr NIR-Absorber in einer Gewächshausfolie automatisch zu mehr Wärmeabsorption, und demzufolge zu einer größeren Temperaturreduktion führt. Der Fachmann sollte ausschließlich aus den Werten der gemessen LDS- und TDS-Werte keine Aussagen über die reellen Effekte auf Pflanzen durch eine Gewächshausfolie, die mit einem NIR-Absorber ausgerüstet ist, herleiten.

Die Erfindung soll nachfolgend anhand von Ausführungsbeispielen näher erläutert werden.

Als Ausführungsbeispiel werden Folien aus einer Standard Blasfolienanlage, mit einer Dicke von 200 µm angegeben. Die Folien bestehen aus einer einzigen Schicht, können aber auch mehrschichtig ausgelegt werden. Neben dem NIR-Absorber wurden auch gängige Additive und Zuschlagstoffe verwendet. Dadurch sollen die als Beispiel angegebenen Folien dem Stand der Technik entsprechen, bis auf die Mischungen mit dem erfindungsgemäßen NIR-Absorber.

Als Polymerträger können in der Regel ein Standard PE (LD oder LLD) oder Standard EVA, wie in der Landwirtschaft üblich, verwendet werden.

Die Art und Weise, wie die Produktion der Folien vonstatten geht, entsprechen dem Stand der Technik und sind dem Fachmann bereits bekannt.

### Beispiel Nr. 1

Zur Herstellung einer Standardfolie von 200 µm Dicke, unter Verwendung der einzelnen Additivkonzentrate, ohne NIR Absorber, für den Fall einer Monoschicht:

| Komponente | Dosierung |
|---|---|
| Kombinationskonzentrat Antifog + IR-Absorber | 5,0 % |
| Kombinationskonzentrat UV Stabilizer + Light Diffuser | 7,5 % |
| Polymerträger | 87,5 % |

### Beispiel Nr. 2

Für den Fall einer 3-Schichtfolie, mit den Dickenverhältnissen von 50 µm -100 µm - 50 µm, ohne NIR Absorber und ohne Antifog-Additiv, wird in jeder Schicht die gleiche Menge an Additiven zugegeben:
außen, mittig, innen:

| Komponente | Dosierung |
|---|---|
| UV Absorber + UV Stabilisator | 7,5 % |
| Light Diffuser | 5,0 % |
| IR Absorber | 7,5 % |
| Polymerträger | 80,0 % |

### Beispiel Nr. 3

NIR-Absorber-Konzentrat (Masterbatch), nötig für die Herstellung eines thermoplastischen Erzeugnisses, gemäß Anspruch 1.

| Komponente | Dosierung |
|---|---|
| NIR Absorber gemäss Anspruch 1 | 10,0 % |
| Polymerträger | 90,0 % |

### Beispiel Nr. 4

Zur Herstellung einer Folie mit einer Dicke von 200 µm, bestehend aus einer Monoschicht, mit NIR Absorber

| Komponente | Dosierung |
|---|---|
| NIR Absorber gemäss Anspruch 1 | 2,5 % |
| Kombinationskonzentrat Antifog + IR-Absorber | 5,0 % |
| Kombinationskonzentrat UV Stabilizer + Light Diffuser | 7,5 % |
| Polymerträger | 85,0 % |

### Beispiel Nr. 5

Für den Fall einer 3-Schichtfolie, mit einer Dicke von 200 µm und den Dickenverhältnissen von 50 µm-100 µm-50 µm, mit NIR Absorber:
Schicht Nr. 1 (außen)

| Komponente | Dosierung |
|---|---|
| UV Absorber + UV Stabilisator | 7,5 % |
| Light Diffuser | 5,0 % |
| IR Absorber | 7,5 % |
| Polymerträger | 80,0 % |

Schicht Nr. 2 (Mitte)

| Komponente | Dosierung |
|---|---|
| NIR-Absorber gemäss Anspruch 1 | 14,0 % |
| UV Absorber + UV Stabilisator | 7,5 % |
| Light Diffuser | 5,0 % |
| IR Absorber | 7,5 % |
| Zusätzlicher NIR Absorber gemäss Anspruch 2 | 1,0 % |
| Polymerträger | 73,0 % |

Schicht Nr. 3 (innen)

| Komponente | Dosierung |
|---|---|
| UV Absorber + UV Stabilisator | 7,5 % |
| Light Diffuser | 5,0 % |
| IR Absorber | 7,5 % |
| Polymerträger | 73,0 % |

Die Bedingungen, unter denen das erfindungsgemäße Material in Gewächshausfolien getestet wurde sowie die daraus entstandenen Ergebnisse, sollen wie folgt näher beschrieben werden.

Gewächshausfolien, verstärkt mit einem NIR-Absorber, gemäss den Beispielen 4 und 5, und zusätzlich einem zweiten organischen NIR-Absorber für den Spektralbereich zwischen 800 nm -1100 nm wurden in Spanien ab 2002 unter reellen, kommerziellen Bedingungen getestet und die Ergebnisse bis zum Frühjahr 2004 verfolgt.

Die Tests wurden im Süden Spaniens, in der Provinz von Almeria, einmal nah an den Städten Balerma-EI Ejido und ein zweites Mal in Roquetas de Mar durchgeführt. Die Position der Testgelände lag 1 km von der Küste entfernt, bei einer Höhe von 50 m ü.N.N. In dieser Region befinden sich auch zahlreiche Gewächshäuser anderer Landwirtschaftsgenossenschaften.

Die Gewächshäuser hatten eine Fläche von 3.500 bis 4.500 m².

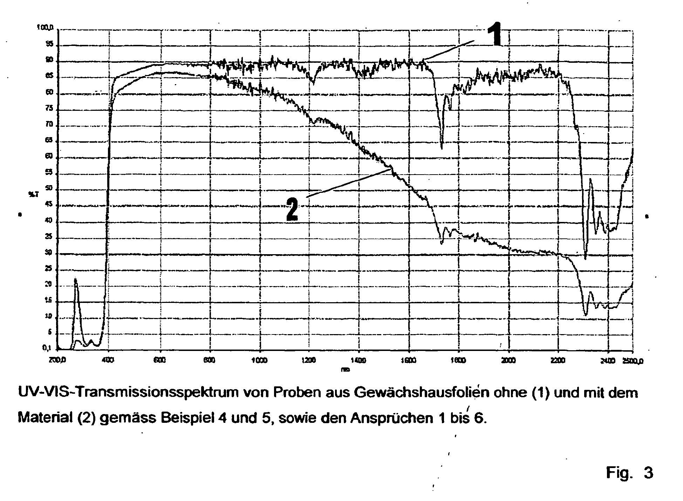

Es wurden für das erste Jahr Tomaten für die Tests ausgewählt, als eines der Standardmassenprodukte, die in Spanien unter einem Gewächshaus angebaut werden. Den Rest bilden Paprika, grüne Gurken, grüne Bohnen und Wassermelonen. In jedem Test wurden je eine Gewächshausfolie mit und je eine ohne NIR-Absorber verwendet. Figur 3 zeigt das UV-VIS-Transmissionspektrum dieser zwei Folien. Man kann die hohe Transmission im PAR-Bereich bei beiden Folien sowie die erhöhte Absorption im NIR-Bereich gegenüber der Referenzfolie verfolgen.

Der zweite NIR-Absorber zwischen 800 nm bis 1200 nm ist nicht zu sehen, da innerhalb von Wochen Migration der Wirksubstanz unter Abbau aus der monoschichtigen Polymerfolie stattgefunden hat.

Es wurde Wert darauf gelegt, dass es außer in der Beschaffenheit der Testfolien selbst, der Anwender weiter seine bisherige Praxis im Umgang mit dem Gewächshaus und den darin angebauten Pflanzen (Bodenpflege, Irrigation, Pflanzenschutzmittelanwendung etc) beibehält, um die Standardbedingungen soweit zu gewährleisten.

Im ersten Jahr wurden monoschichtige, im zweiten Jahr mehrschichtige Folien verwendet.

Im ersten Test-Jahr am Anfang der Erntesaison (November 2002) wurden sofort signifikante Änderungen im Ertrag (5% mehr Tomaten) zwischen dem Testgewächshaus und der Referenz festgestellt. Nach weiteren Wochen hatte sich dieser Effekt auf ca. 10% erhöht und ist bis zu Ende der Erntesaison im Sommer 2003 konstant geblieben. Dieses Gewächshaus wurde für einen zweiten Versuch, beginnend im Sommer 2003 bis zum Sommer 2004, noch einmal verwendet. Überraschenderweise wurden wieder die gleichen Resultate wie im ersten Jahr mit Tomaten erzielt (10% mehr Tomatenfrüchte im Testgewächshaus), trotzdem dass die verwendete Folie monoschichtig war und standardmäßig fast ausschließlich Mehrschichtfolien verwendet wurden. Wegen des guten Zustandes der Folie in bezug auf mechanische Stabilität wurde diese Folie wieder für eine dritte Saison, beginnend im Sommer 2004 bis zum Sommer 2005, eingesetzt. Die Wirkung des ersten NIR-Absorbers gemäß den Ansprüchen 1 und 2 wird nicht durch den Aufbau der Folie als Mono- oder Mehrschicht beeinflusst. Auch die Anwesenheit eines zweiten NIR-Absorbers für den Bereich 800 bis 1200 nm brachte, durch die geringe Stabilität, keine Synergien oder wesentliche Vorteile in der Wirkung auf die Pflanzen.

Weiter wurden im Sommer 2003 mehr Test-Gewächshäuser für Tomaten und Paprika-Früchte (in Spanien) ausgelegt. Diesmal sind Mehrschichtfolien hergestellt worden, die das Ziel hatten, einzig den zweiten NIR-Absorber für den Bereich 800 bis 1200 nm zu schützen, die Migration zu verzögern oder zu verhindern, eine Witterungsbeständigkeit zu gewährleisten sowie dessen Wirkung zu verlängern. Um dies zu erreichen, wurde, neben der standardmäßigen UV-Stabilisierung nach dem aktuellen Stand der Technik, eine bestimmte und zusätzliche Kombination zwischen UV-Absorber und UV-Stabilisator verwendet. Die Anwesenheit eines UV-Absorbers hat auch nicht, wie vermutet, zu einer Desorientierung von Nutzinsekten wie Bienen und Hummeln, die eigentlich zur erfolgreichen Befruchtung der Pflanze benötigt werden, geführt.

Darüber hinaus wurde die Konzentration des NIR-Absorbers im Endprodukt, gemäß den Ansprüchen 1 und 2, um ein Vielfaches erhöht. Es sollte untersucht werden, ob tatsächlich die Aussage stimmt, dass mehr NIR-Absorber zu weniger Wärme und demzufolge zu kleineren Temperaturen führen würde. Des Weiteren wurden drei verschiedene Datenerfassungsgeräte in- und außerhalb der Gewächshäuser (außerhalb Nordposition und innerhalb im Zentrum beider Test- und Referenzgewächshäuser) vom Typ EC650 (Fourier Systems Ltd) verwendet, um einen Temperaturabnahmeeffekt, neben anderen wichtigen Umweltparametern, quantitativ (jede 15 Minuten) zu erfassen.

Beim Anbau von Paprikafrüchten wurde festgestellt, dass die Entwicklung der Früchte im Testgewächshaus um ca. eine Woche verzögert war, als im Referenzgewächshaus. Jedoch wurde maximal ein kleinerer Mehrertrag an Paprika von ca. 5% festgestellt.

Bezüglich Tomatenpflanzen wurde seit Beginn der Erntesaison Ende 2003 ein konstanter Mehrertrag an Tomaten von durchschnittlich 11 % aus dem Testgewächshaus, im Vergleich zum Referenzgewächshaus, festgestellt. Dieses Ergebnis ist um so überraschender, weil eine zweite Gewächshausfolie im gleichen Testgelände mit einer um ein Vielfaches verringerten Konzentration annähernd 10% Mehrertrag unter gleichzeitigen Bedingungen ergeben hat.

Die Resultate werden als Beweis herangezogen dafür, dass es zu einem vergleichbaren Mehrertrag an bestimmten Pflanzen erfindungsgemäß kommen kann, unabhängig von einer Zunahme der Konzentration der Wirksubstanz, der Art des Folienaufbaus und von möglichen, nicht messbaren Temperatureffekten innerhalb des Gewächshauses.

Zu Beginn der Anbau- und Wachstumsperiode wurde als einziger Effekt beobachtet, dass junge Tomatenpflanzen unter der Testfolie, mehr als unter der Referenzfolie, uniform gewachsen sind. Keine weiteren Unterschiede in der Morphologie der Tomatenpflanzen wurden beobachtet.

## Patentansprüche

1. Verwendung einer Folie oder Platte enthaltend:
a) ein teilkristallines, thermoplastisches, opakes Polymer,
b) nicht oberflächenmodifizterte, nanoskalige Teilchen aus der Gruppe der II-IV-Halbleiter, nämlich aus Zinn- und Indiumoxid, Indium-Zinnoxide variabler Zusammensetzung und mit Antimon dotierte Zinnoxide, mit einer maximalen Teilchengröße unter 200 nm in einem Konzentrationsbereich zwischen 0,01 bis 5 Gew.-% und
als Bedachungsmaterialien für Gewächshäuser im Agrar- und Gartenbaubereich zur Erhöhung von Emteerträgen an Tomatenpflanzen.

## Claims

1. Use of a film or plate containing
a) a part-crystalline, thermoplastic, opaque polymer,
b) nano-scale particles with an unmodified surface, selected from the group of II-IV semi-conductors, namely tin oxide and indium oxide, indium tin oxides of variable compositions and antimony-doped tin oxides, with a maximum particle size of less than 200 nm in a concentration range of between 0.01 and 5 % by weight, and
as roofing materials for greenhouses in agriculture and horticulture so as to improve the yields of tomato plants.

## Revendications

1. Utilisation d'un film ou d'une plaque contenant
a) un polymère partiellement cristallin, thermoplastique, opaque,
b) des nanoparticules présentant une surface non-modifiée, qui sont choisies dans le groupe des semi-conducteurs II-IV, à savoir l'oxyde stannique et l'oxyde d'indium, les oxydes stanniques d'indium à composition variable et des oxydes stanniques dotées d'antimoine, présentant une taille de particule maximale de moins de 200 nm dans une gamme de concentrations comprise entre 0,01 et 5 % en poids, et
en tant que matériaux de toiture pour des serres dans l'agriculture et l'horticulture pour augmenter la récolte de tomates.
